# EUROPEAN PATENT APPLICATION

(11) **EP 4 084 504 A1**
(43) Date of publication of application: **02.11.2022**
(21) Application number: 19957175.3
(22) Date of filing: 23.12.2019
(51) Int. Cl.: H04W 4/00

(54) **INFORMATION ACQUISITION METHOD, INFORMATION ACQUISITION APPARATUS AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2019/127612
(87) International publication number: WO 2021/127915

(57) **Abstract**

The present disclosure relates to an information acquisition method, an information acquisition apparatus and a storage medium. The information acquisition method is applied to a first device, and comprises: detecting a second device capable of providing first information; and sending a request for acquiring the first information to the second device, and acquiring the first information from the second device. By means of the present disclosure, the power of the first device acquiring information from a network device can be reduced.

## Description

### TECHNICAL FIELD

The disclosure relates to the field of communication technologies, and more particularly, to a method and an apparatus for obtaining information and a storage medium.

### BACKGROUND

Terminals that support new radio-light (NR-light) are more widely applied as communication technologies developed.

A typical scenario supported by NR-light is wearable devices. Compared with mobile terminals that communicate with network devices, a bandwidth supported by NR-light such as wearable devices is reduced and a number of antennas is also reduced. Therefore, compared to mobile terminals, there is a coverage loss. Thus, coverage enhancement is needed and a usual enhancement manner is repeated transmission and reception. However, repeated transmission or reception is not conducive to power saving of wearable devices.

### SUMMARY

The disclosure provides a method and an apparatus for obtaining information and a storage medium to overcome problems in the related art.

According to a first aspect of embodiments of the disclosure, a method for obtaining information is provided. The method is applicable to a first device and includes: detecting a second device capable of providing first information; transmitting a request for obtaining the first information to the second device and obtaining the first information from the second device.

In some embodiments, detecting the second device capable of providing the first information includes: detecting second devices connected to the first device by a near-distance communication manner; and determining the second device capable of providing the first information from the detected second devices connected to the first device.

In some embodiments, transmitting the request for obtaining the first information to the second device and obtaining the first information from the second device, includes: transmitting the request for obtaining the first information to the second device by the near-distance communication manner and obtaining the first information from the second device by the near-distance communication manner.

In some embodiments, the first information includes timing advance information.

In some embodiments, the first information includes timing advance update information.

In some embodiments, obtaining the first information from the second device includes: obtaining a manner of obtaining the timing advance update information by negotiating with the second device.

In some embodiments, obtaining the first information from the second device includes: obtaining the timing advance update information from a network device.

In some embodiments, the method further includes: sending the obtained timing advance update information to the second device.

In some embodiments, obtaining the first information from the second device includes: obtaining the timing advance update information sent by the second device.

In some embodiments, the first information includes system information.

In some embodiments, the system information includes at least one of: synchronization signal block (SSB), remaining minimum system information (RMSI) and other system information (OSI).

In some embodiments, the system information includes system information pre-stored in the second device or system information obtained by the second device from a network device after obtaining the request.

In some embodiments, the method further includes: obtaining second information from the network device, in which the second information includes other system information other than the obtained system information.

In some embodiments, the method further includes: transmitting the request for obtaining the first information to a network device in response to not detecting the second device capable of providing the first information and obtaining the first information from the network device.

In some embodiments, the first device is a terminal supporting new radio-light (NR-light) and the second device is a terminal supporting new radio (NR).

According to a second aspect of embodiments of the disclosure, a method for obtaining information is provided. The method is applicable to a second device and includes: obtaining a request for obtaining first information from a first device; and sending the first information to the first device.

In some embodiments, sending the first information to the first device includes: sending the first information to the first device by a near-distance communication manner.

In some embodiments, the first information includes timing advance information.

In some embodiments, the first information includes timing advance update information.

In some embodiments, the method further includes: obtaining a manner of obtaining the timing advance update information by negotiating with the first device.

In some embodiments, sending the first information to the first device includes: obtaining the timing advance update information from a network device; and sending the obtained timing advance update information to the first device.

In some embodiments, the method further includes: obtaining the timing advance update information from the first device, in which the timing advance update information is obtained by communication between the first device and a network device.

In some embodiments, the first information includes system information.

In some embodiments, the system information includes at least one of: SSB, RMSI and OSI.

In some embodiments, the system information includes pre-stored system information or obtained from a network device by the second device after obtaining the request.

In some embodiments, the first device is a terminal supporting NR-light and the second device is a terminal supporting NR

According to a third aspect of embodiments of the disclosure, an apparatus for obtaining information is provided. The apparatus is applicable to a first device and includes: a detecting unit configured to detect a second device capable of providing first information; a transmitting unit configured to transmit a request for obtaining the first information to the second device; and a receiving unit configured to obtain the first information from the second device.

In some embodiments, the detecting unit is configured to detect second devices connected to the first device by a near-distance communication manner; and determine the second device capable of providing the first information from the detected second devices connected to the first device.

In some embodiments, the transmitting unit is configured to transmit the request for obtaining the first information to the second device by the near-distance communication manner. The receiving unit is configured to obtain the first information from the second device by the near-distance communication manner.

In some embodiments, the first information includes timing advance information.

In some embodiments, the first information includes timing advance update information.

In some embodiments, the receiving unit is configured to obtain the first information by obtaining a manner of obtaining the timing advance update information by negotiating with the second device.

In some embodiments, the receiving unit is configured to obtain the first information from the second device by obtaining the timing advance update information from a network device.

In some embodiments, the transmitting unit is configured to send the obtained timing advance update information to the second device.

In some embodiments, the receiving unit is configured to obtain the first information by obtaining the timing advance update information sent by the second device.

In some embodiments, the first information includes system information.

In some embodiments, the system information includes at least one of: SSB, RMSI and OSI.

In some embodiments, the system information includes system information pre-stored in the second device or system information obtained by the second device from a network device after obtaining the request.

In some embodiments, the receiving unit is configured to obtain second information from the network device, in which the second information includes other system information other than the obtained system information.

In some embodiments, the transmitting unit is configured to transmit the request for obtaining the first information to a network device in response to not detecting the second device capable of providing the first information and obtain the first information from the network device.

In some embodiments, the first device is a terminal supporting NR-light and the second device is a terminal supporting NR

According to a fourth aspect of embodiments of the disclosure, an apparatus for obtaining information is provided. The apparatus is applicable to a second device and includes: an obtaining unit configured to obtain a request for obtaining first information from a first device; and a sending unit configured to send the first information to the first device.

In some embodiments, the sending unit is configured to send the first information to the first device by a near-distance communication manner.

In some embodiments, the first information includes timing advance information.

In some embodiments, the first information includes timing advance update information.

In some embodiments, the obtaining unit is configured to obtain a manner of obtaining the timing advance update information by negotiating with the first device.

In some embodiments, the sending unit is configured to send the first information to the first device by obtaining the timing advance update information from a network device; and sending the obtained timing advance update information to the first device.

In some embodiments, the obtaining unit is configured to obtain the timing advance update information from the first device, in which the timing advance update information is obtained by communication between the first device and a network device.

In some embodiments, the first information includes system information.

In some embodiments, the system information includes at least one of: SSB, RMSI and OSI.

In some embodiments, the system information includes pre-stored system information or obtained from a network device by the second device after obtaining the request.

In some embodiments, the first device is a terminal supporting NR-light and the second device is a terminal supporting NR

According to a fifth aspect of embodiments of the disclosure, a device for obtaining system information is provided, which includes: a processor; and a memory for storing instructions executable by the processor; in which the processor is configured to perform the method as described in the first aspect or any implementation of the first aspect.

According to a sixth aspect of embodiments of the disclosure, which includes: a processor; and a memory for storing instructions executable by the processor; in which the processor is configured to perform the method as described in the second aspect or any implementation of the second aspect.

According to a seventh aspect of embodiments of the disclosure, a non-transitory computer-readable storage medium is provided. When instructions stored in the storage medium are executed by a processor, the processor is caused to perform the method as described in the first aspect or any implementation of the first aspect.

According to an eighth aspect of embodiments of the disclosure, a non-transitory computer-readable storage medium is provided. When instructions stored in the storage medium are executed by a processor, the processor is caused to perform the method as described in the first aspect or any implementation of the first aspect.

The technical solutions provided by embodiments of the disclosure may include the following beneficial effects. When the first device needs to obtain information from the network device, it does not directly obtain information from the network device but obtains information from the second device capable of providing information, to save the power of obtaining by the first device information from the network device.

It is to be understood that both the foregoing general description and the following detailed description are exemplary and explanatory only and are not restrictive of the disclosure.

### BRIEF DESCRIPTION OF THE DRAWINGS

The drawings herein, which are incorporated in and constitute a part of this specification, illustrate embodiments consistent with the disclosure and, together with the specification, serve to explain the principles of the disclosure.
FIG. 1 is a schematic diagram illustrating a communication system according to some embodiments.
FIG. 2 is a flowchart illustrating a method for obtaining information according to some embodiments.
FIG. 3 is a flowchart illustrating a method for obtaining information according to some embodiments.
FIG. 4 is a block diagram illustrating an apparatus for obtaining information according to some embodiments.
FIG. 5 is a block diagram illustrating an apparatus for obtaining information according to some embodiments.

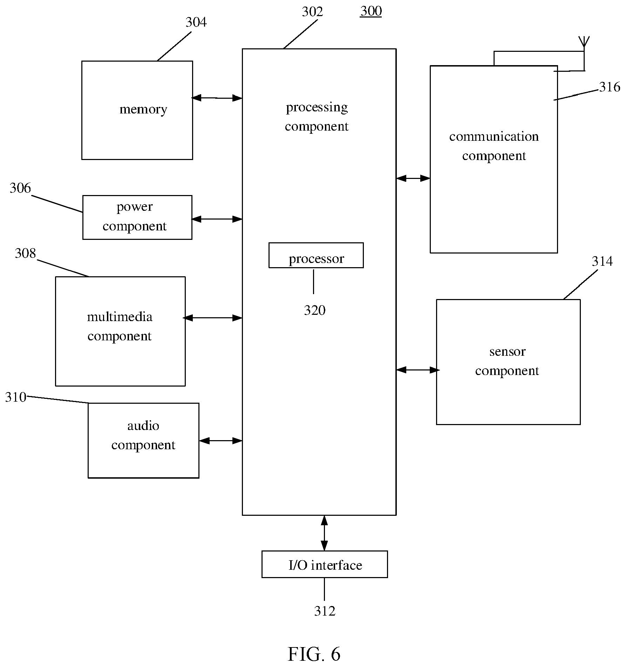

FIG. 6 is a block diagram illustrating a device for obtaining information according to some embodiments.

### DETAILED DESCRIPTION

Reference will now be made in detail to embodiments, examples of which are illustrated in the drawings. The following description refers to the drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

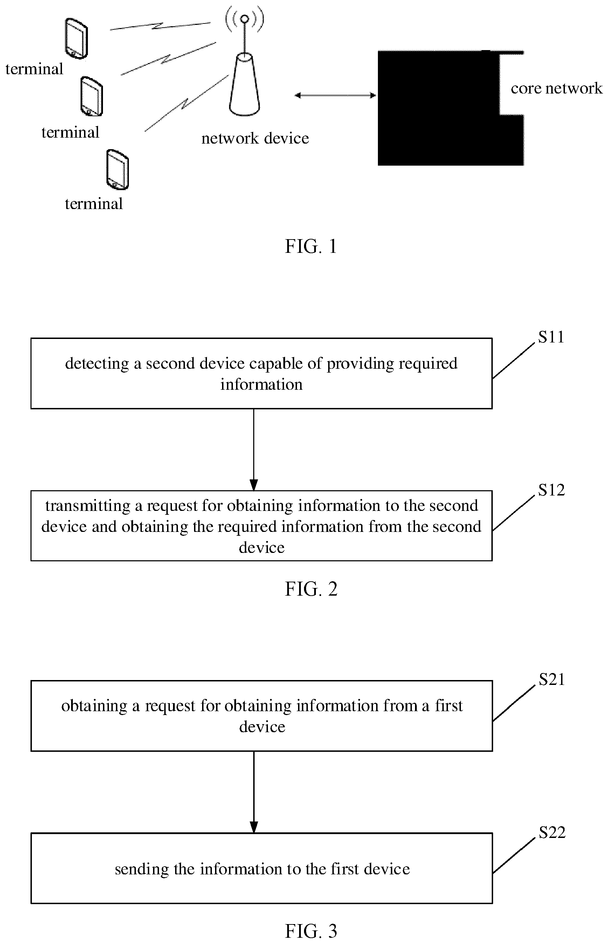

The disclosure provides a method for obtaining information, which is applicable to a wireless communication system in FIG. 1. As illustrated in FIG. 1, a terminal may access to a network through a network device such as a base station. Data backhaul and fronthaul may be completed by the network device and a core network for various communication services.

It is understood that the wireless communication system is a network that provides wireless communication functions. Wireless communication systems can use different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. Networks can be divided into 2G (generation) network, 3G network, 4G network or future evolution network, such as 5G network, based on different network capacities, speeds, delays and other factors. The 5G network can also be called a new radio (NR) network. For the convenience of description, the disclosure sometimes refers to the wireless communication network as the network or the system. The network in the disclosure may further include a radio access network (RAN) and a core network (CN). The network includes a network device. The network device may be, for example, a radio access network node, a core network device or the like. The radio access network node may also be called a base station. The network can provide network services for the terminal through the network device. Different operators can provide different network services for the terminal. It can also be understood that different operators correspond to different operator networks.

A terminal can be referred to as a user equipment (UE), a mobile station (MS), a mobile terminal (MT) or the like, which is a device that provides voice and/or data connectivity to a user. For example, the terminal may be a handheld device or an in-vehicle device or the like, with a wireless connection function. At present, some examples of terminals are smart phones, pocket personal computers (PPCs), handheld computers, personal digital assistants (PDAs), notebook computers, tablet computers, wearable devices, in-vehicle devices or the like.

Internet of Things (IoT) technologies such as narrow band Internet of Things (NB-IoT) and machine type communication (MTC) have been proposed to support IoT services. At present, IoT devices in IoT technologies such as NB-IoT and MTC mainly target low-rate and high-latency scenarios. In low-rate and high-latency scenarios, IoT devices usually satisfy requirements of low cost, low complexity, a certain degree of coverage, performance enhancement and power enhancement, for example, meter reading, environmental monitoring and other scenarios. At present, NB-IoT can only support a maximum rate of several hundred k and MTC can only support a maximum rate of several M. With the continuous development of IoT services such as popularization of video surveillance, smart home, wearable devices and industrial sensor monitoring, these services usually require a speed of tens to 100M and also have relatively high requirements for delay. Based on this situation, it is proposed to design a new IoT technology in the 5G NR to cover these middle-level IoT devices. IoT based on the 5G NR usually needs to satisfy low cost, low complexity, a certain degree of coverage enhancement and power saving.

Since the NR is designed currently for high-level terminals such as high-rate and low-latency, the current design may not satisfy the above-mentioned requirements of NR-IoT. Therefore, the current NR system needs to be modified to satisfy the requirements of NR-IoT. For example, in order to satisfy requirements of low cost and low complexity, a radio frequency (RF) bandwidth of NR-IoT can be limited, for example, to 5M Hz or 10M Hz. Or a size of a buffer of NR-IoT can be limited and then a size of receiving a transmission block for each time is limited or the like. For power saving, a possible optimization direction is to simplify a communication process and reduce a number of times that a NR-IoT user detects a downlink control channel.

A NR-light terminal is a terminal that satisfies the NB-IoT scenario. A typical scenario supported by the NR-light terminal is a wearable device. The wearable device in the 5G may be generally equipped with an eSIM (subscriber identity module) to support direct communication between the wearable device and the network device such as the base station. At the same time, on the other hand, because the wearable device is also equipped with Bluetooth, WIFI or other modules that can directly communicate with a 5G NR terminal such as a smartphone, the wearable device can also directly communicate with the 5G NR terminal such as the smartphone.

As a bandwidth supported by the wearable device has been reduced and a number of antennas has also been reduced, compared with other 5G users, there is a coverage loss. Thus, coverage enhancement is needed and a usual enhancement manner is repeated transmission and reception. For example, when the wearable device needs to obtain uplink synchronization, the wearable device directly initiates a random-access process to obtain the uplink synchronization from the network device such as the base station. The manner of obtaining the uplink synchronization in the NR is based on random access. Generally, in the random-access process, message 2 (Msg. 2) includes a timing advance (TA) related to synchronization. Even if the current random-access process may be simplified in future designs, a random-access preamble transmission and a Msg. 2 reception are needed at least. Msg.2 is included in a physical downlink shared channel (PDSCH) and the PDSCH is scheduled by a physical downlink control channel (PDCCH). Therefore, in order to obtain the uplink synchronization, it needs at least to transmit the preamble and receive the PDCCH and the PDSCH containing Msg.2. The coverage of the wearable device is limited. In order to succeed in random access, the preamble needs to be repeatedly transmitted and the PDCCH and PDSCH need to be received multiple times to receive the correct Msg.2, which is a waste of power.

Therefore, repeated transmission or reception is not conducive to power saving of the wearable device.

Generally, information obtained among multiple devices that can interact with the network device is the same such as the TA and system information obtained by the wearable device and the smart phone of the same user. In view of this, embodiments of the disclosure provide a method for obtaining information. When it is determined that a device needs to obtain information from a network device, it detects another device capable of providing required information, and the information is obtained from the other device capable of providing the required information. For example, The NR-light terminal such as the wearable device can obtain TA information and system information from the NR terminal such as the smart phone.

For the convenience of description in embodiments of the disclosure, devices capable of communicating with the network device and obtaining information from the network device are referred to as a first device and a second device. The first device is a device that needs to obtain information from the network device and the second device is a device that has obtained information from the network device.

FIG. 2 is a flowchart illustrating a method for obtaining information according to some embodiments. As illustrated in FIG. 2, the method is applicable to the first device and includes the following.

In S 11, a second device capable of providing required information is detected.

In embodiments of the disclosure, when the first device determines that information needs to be obtained from the network device, it may detect the second device capable of providing the required information. Determining that information needs to be obtained from the network device may be such as a need to perform uplink synchronization, a need to obtain system information from the network device or the like.

The second device capable of providing the required information may be a device that has interacted with the network device and obtained the information required by the first device.

Further, the first device may employ such as a near-distance communication manner to detect second devices connected to the first device, and determine the second device capable of providing the required information among the detected second devices connected. The near-distance communication manner may be, for example, Bluetooth, infrared, WIFI or sidelink. For example, the first device is a wearable device and the second device is a smart phone. There is a Bluetooth connection between the wearable device and the smart phone. The wearable device can discover Bluetooth devices connected nearby by scanning. The smart phone that has obtained the information from the network device among the detected Bluetooth devices may be determined.

In S12, a request for obtaining information is transmitted to the second device and the required information is obtained from the second device.

In embodiments of the disclosure, the first device may transmit the request for obtaining information to the second device by such as the near-distance communication manner, and obtain the required information from the second device by such as the near-distance communication manner.

In embodiments of the disclosure, when the first device needs to obtain information from the network device, it does not directly obtain the information from the network device. The information can be obtained from the second device capable of providing the information, which saves the power of obtaining by the first device the information from the network device.

FIG. 3 is a flowchart illustrating a method for obtaining information according to some embodiments. As illustrated in FIG. 3, the method is applicable to the second device and includes the following.

In S21, a request for obtaining information is obtained from the first device.

In S22, the information is sent to the first device.

In embodiments of the disclosure, the second device can provide the first device with the information that the first device needs to obtain from the network device. After obtaining the request for obtaining the information from the first device, the second device may send the information to the first device, so as to save the power of obtaining the information from the network device for the first device.

The method for obtaining information in embodiments of the disclosure may be described below in combination with practical applications.

In an implementation manner, the method for obtaining information in embodiments of the disclosure is applied to a scenario of obtaining TA information. The first device and the second device need to obtain the same TA. For example, the first device is a wearable device of a user and the second device is a smart phone device of the same user. In embodiments of the disclosure, the TA can be forwarded to the wearable device through the smart phone device.

The wearable device can determine whether there is a smart phone device nearby that can provide it with a TAof a network device such as a base station before obtaining uplink synchronization of the base station. For example, the wearable device and the smart phone device are connected via Bluetooth and the wearable device can scan to find nearby connected Bluetooth devices. When the wearable device finds by scanning that there is a device nearby that can provide the TA, the wearable device can initiate a request for time synchronization to it. For example, if the wearable device scans to find the smart phone device in the connected Bluetooth devices, it transmits the request for obtaining the TA to the smart phone device and the smart phone device sends the TA in use to the wearable device. The communication mode between the wearable device and the device providing the TA can be Bluetooth, infrared, WIFI, sidelink, etc.

In embodiment of the disclosure, when the first device does not detect the second device capable of providing the information, it transmits the request for obtaining the information to the network device and obtains the information from the network device. For example, when the wearable device finds that there is no device nearby that can provide the TA, the wearable device directly initiates a random-access procedure to obtain the uplink synchronization.

In embodiment of the disclosure, in a scenario where the TA needs to be updated, the first device may obtain TA update information, for example, in a scenario where a high-speed movement causes uplink out-of-synchronization or a cell switching scenario.

In embodiments of the disclosure, the TA update information may be obtained by the first device or may be obtained by the second device and sent to the first device. In an implementation manner, the first device negotiates with the second device to determine a manner of obtaining the TA update information. For example, when it is determined that the TA needs to be updated, it negotiates with the second device to obtain the timing advance update information. If the negotiation result is that the first device obtains the TA update information, the first device obtains the TA update information from the network device. In embodiments of the disclosure, after obtaining the TA update information from the network device, the first device may send the obtained TA update information to the second device. If the negotiation result is that the second device obtains the TA update information, the second device obtains the TA update information and synchronously sends it to the first device, and the first device can obtain the TA update information sent by the second device.

In an implementation scenario, when both the smart phone device and the wearable device are out of synchronization (for example, in a high-speed moving scenario), the two can determine through negotiation that one of the devices may perform the random access, and the TA update information may be sent after synchronization.

In another implementation manner, the first device may obtain the TA update information sent by the second device. For example, in an implementation scenario, when the smart phone device finds that the uplink is out of synchronization or finds a cell handover, the smart phone device may update the TA through the random access to obtain the TA update information. When connected to the wearable device, the new TA can also be sent to the wearable device.

In an implementation manner, the method for obtaining information in embodiments of the disclosure is applied to a scenario of obtaining system information. The first device and the second device need to obtain the same system information. For example, the first device is a wearable device of a user and the second device is a smart phone device of the same user. In embodiments of the disclosure, the system information can be sent to the wearable device through the smart phone device.

The wearable device can determine whether there is a smart phone device nearby that can provide the system information to it when the wearable device needs to obtain the system information from a network device such as a base station. For example, the wearable device and the smart phone device are connected via Bluetooth and the wearable device can scan to find nearby connected Bluetooth devices. When the wearable device finds by scanning that there is a device nearby that can provide the system information, the wearable device can initiate a request for obtaining the system information. For example, if the wearable device scans to find the smart phone device in the connected Bluetooth devices, it transmits the request for obtaining the system information to the smart phone device, and the smart phone device sends the system information in use to the wearable device. The communication mode between the wearable device and the device providing the system information can be Bluetooth, infrared, WIFI, sidelink, etc.

In embodiments of the disclosure, when the first device does not detect the second device capable of providing the information, it transmits the request for obtaining the information to the network device and obtains the information from the network device. For example, when the wearable device finds that there is no device nearby that can provide the system information, the wearable device directly obtains the system information from the network device such as the base station.

In embodiments of the disclosure, the second device can provide the system information to the first device in the following two manners. In one manner, the second device has stored the obtained system information. When the first device transmits the request for obtaining the system information to the second device, the second device transmits the stored system information to the first device. In another manner, when the second device obtains the request for obtaining the system information from the first device, it obtains the system information from the network device and transmits the obtained system information to the first device without storing the system information.

In embodiments of the disclosure, the information obtained by the first device from the second device may be a part of information that needs to be obtained from the network device, and the remaining information that needs to be obtained from the network device can continue to be obtained from the network device. For example, in embodiments of the disclosure, the system information obtained by the wearable device from the network device may be one or more of: an SSB, RMSI and OSI. The remaining un-obtained system information can continue to be obtained from the network device.

In embodiments of the disclosure, the information that the first device can obtain from the second device may be referred to as first information and the remaining information that needs to be continuously obtained from the network device is referred to as second information. For example, the second information may include other system information in addition to the obtained system information.

It is understood that the method for obtaining information provided by embodiments of the disclosure can be applied to the process interaction between the first device and the second device. For the execution process of the first device and the second device involved in the interaction process, reference should be made to the related description of the foregoing embodiments, which will not be repeated herein.

Based on the same concept, embodiments of the disclosure also provide an apparatus for transmitting information.

It can be understood that, the apparatus for transmitting information provided in embodiments of the disclosure includes hardware structures and/or software modules for performing each function to realize the above-mentioned functions. In combination with units and algorithm actions of examples disclosed in the disclosure, embodiments of the disclosure can be implemented in a form of hardware or a combination of hardware and computer software. Whether a certain function is executed by hardware or software-driven hardware depends on specific applications and design constraint conditions of the technical solutions. Those skilled in the art can use different methods for each specific application to implement the described functions, but such implementation should not be considered as going beyond the scope of the technical solutions of embodiments of the disclosure.

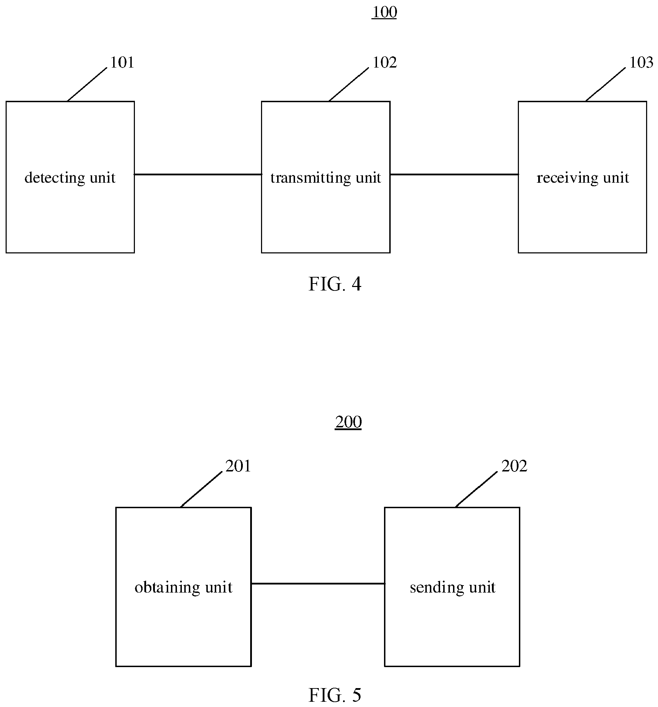

FIG. 4 is a block diagram illustrating an apparatus for obtaining information according to some embodiments. Referring to FIG. 4, the apparatus 100 is applicable to a first device and includes a detecting unit 101, a transmitting unit 102 and a receiving unit 103.

The detecting unit 101 is configured to detect a second device capable of providing first information. The transmitting unit 102 is configured to transmit a request for obtaining the first information to the second device. The receiving unit 103 is configured to obtain the first information from the second device.

In some embodiments, the detecting unit 101 is configured to detect second devices connected to the first device by a near-distance communication manner; and determine the second device capable of providing the first information from the detected second devices connected to the first device.

In some embodiments, the transmitting unit 102 is configured to transmit the request for obtaining the first information to the second device by the near-distance communication manner. The receiving unit 103 is configured to obtain the first information from the second device by the near-distance communication manner.

In some embodiments, the first information is timing advance information.

In some embodiments, the first information is timing advance update information.

In some embodiments, the receiving unit 103 is configured to obtain the first information by obtaining a manner of obtaining the timing advance update information by negotiating with the second device.

In some embodiments, the receiving unit is configured to obtain the first information from the second device by obtaining the timing advance update information from a network device.

In some embodiments, the transmitting unit is configured to send the obtained timing advance update information to the second device.

In some embodiments, the transmitting unit 102 is configured to send the obtained timing advance update information to the second device.

In some embodiments, the receiving unit 103 is configured to obtain the first information by obtaining the timing advance update information sent by the second device.

In some embodiments, the first information is system information.

In some embodiments, the system information is at least one of: SSB, RMSI and OSI.

In some embodiments, the system information is system information pre-stored in the second device or system information obtained by the second device from a network device after obtaining the request.

In some embodiments, the receiving unit 103 is configured to obtain second information from the network device, in which the second information includes other system information other than the obtained system information.

In some embodiments, the transmitting unit 102 is configured to transmit the request for obtaining the first information to a network device in response to not detecting the second device capable of providing the first information and obtain the first information from the network device.

In some embodiments, the first device is a terminal supporting NR-light and the second device is a terminal supporting NR

FIG. 5 is a block diagram illustrating an apparatus for obtaining information according to some embodiments. Referring to FIG. 5, the apparatus 200 is applicable to a second device and includes an obtaining unit 201 and a sending unit 202.

The obtaining unit 201 is configured to obtain a request for obtaining first information from a first device. The sending unit 202 is configured to send the first information to the first device.

In some embodiments, the sending unit 202 is configured to send the first information to the first device by a near-distance communication manner.

In some embodiments, the first information is timing advance information.

In some embodiments, the first information is timing advance update information.

In some embodiments, the obtaining unit 202 is configured to obtain a manner of obtaining the timing advance update information by negotiating with the first device.

In some embodiments, the sending unit 202 is configured to send the first information to the first device by obtaining the timing advance update information from a network device; and sending the obtained timing advance update information to the first device.

In some embodiments, the obtaining unit 201 is configured to obtain the timing advance update information from the first device, in which the timing advance update information is obtained by communication between the first device and a network device.

In some embodiments, the first information is system information.

In some embodiments, the system information is at least one of: SSB, RMSI and OSI.

In some embodiments, the system information is pre-stored system information or obtained from a network device by the second device after obtaining the request.

In some embodiments, the first device is a terminal supporting NR-light and the second device is a terminal supporting NR

With respect to the apparatus in the above embodiments, the specific manners for performing operations for individual modules therein have been described in detail in the embodiments regarding the methods, which will not be elaborated herein.

FIG. 5 is a block diagram illustrating a device 300 for obtaining information according to some embodiments. For example, the device 300 may be a mobile phone, a computer, a digital broadcast terminal, a messaging device, a gaming console, a tablet, a medical device, exercise equipment, a personal digital assistant, and the like.

Referring to FIG. 5, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions to perform all or part of the actions in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as WiFi, 2G, or 3G, or a combination thereof. In one exemplary embodiment, the communication component 316 receives a broadcast signal or broadcast associated information from an external broadcast management system via a broadcast channel. In one exemplary embodiment, the communication component 316 further includes a near field communication (NFC) module to facilitate near field communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 304, executable by the processor 320 in the device 300, for performing the above-described methods. For example, the non-transitory computer-readable storage medium may be a ROM, a RAM, a CD-ROM, a magnetic tape, a floppy disc, an optical data storage device, and the like.

It should be understood that "plurality" or "multiple" in the disclosure may refer to two or more, and other quantifiers are similar. The term "and/or" may describe association relationships of associated objects, indicating that there may be three types of relationships, for example, A and/or B, which may mean: A exists alone, A and B exist at the same time, and B exists alone. The character "/" generally indicates that the associated objects before and after are in an "or" relationship. The singular forms of "a", "said" and "the" are also intended to include plural forms, unless the context clearly indicates other meanings.

It should be understood that although the terms first, second, and the like may be used to describe various information, the information should not be limited to these terms. These terms are only used to distinguish the same type of information from each other, and do not indicate a specific order or degree of importance. In fact, expressions such as "first" and "second" can be used interchangeably. For example, without departing from the scope of the disclosure, the first information may also be referred to as the second information, and similarly, the second information may also be referred to as the first information.

It can be further understood that although the operations in embodiments of the disclosure are described in a specific order in the drawings, they should not be understood as requiring these operations to be performed in the specific order shown or in a serial order, or requiring performing all the operations shown to get the desired result. In certain circumstances, multitasking and parallel processing may be advantageous.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for obtaining information, for a first device, comprising:
detecting a second device capable of providing first information; and
transmitting a request for obtaining the first information to the second device and obtaining the first information from the second device.

2. The method as claimed in claim 1, wherein detecting the second device capable of providing the first information comprises:
detecting second devices connected to the first device by a near-distance communication manner; and
determining the second device capable of providing the first information from the detected second devices connected to the first device.

3. The method as claimed in claim 1 or 2, wherein transmitting the request for obtaining the first information to the second device and obtaining the first information from the second device, comprises:
transmitting the request for obtaining the first information to the second device by the near-distance communication manner and obtaining the first information from the second device by the near-distance communication manner.

4. The method as claimed in claim 1, wherein the first information comprises timing advance information.

5. The method as claimed in claim 1, wherein the first information comprises timing advance update information.

6. The method as claimed in claim 5, wherein obtaining the first information from the second device comprises:
obtaining a manner of obtaining the timing advance update information by negotiating with the second device.

7. The method as claimed in claim 5 or 6, wherein obtaining the first information from the second device comprises:
obtaining the timing advance update information from a network device.

8. The method as claimed in claim 7, further comprising:
sending the obtained timing advance update information to the second device.

9. The method as claimed in claim 5 or 6, wherein obtaining the first information from the second device comprises:
obtaining the timing advance update information sent by the second device.

10. The method as claimed in claim 1, wherein the first information comprises system information.

11. The method as claimed in claim 10, wherein the system information comprises at least one of: synchronization signal block (SSB), remaining minimum system information (RMSI) and other system information (OSI).

12. The method as claimed in claim 10 or 11, wherein the system information comprises system information pre-stored in the second device or system information obtained by the second device from a network device after obtaining the request.

13. The method as claimed in claim 12, further comprising:
obtaining second information from the network device, wherein the second information comprises other system information other than the obtained system information.

14. The method as claimed in claim 1, further comprising:
transmitting the request for obtaining the first information to a network device in response to not detecting the second device capable of providing the first information and obtaining the first information from the network device.

15. The method as claimed in claim 1, wherein the first device is a terminal supporting new radio-light (NR-light) and the second device is a terminal supporting new radio (NR).

16. A method for obtaining information, for a second device, comprising:
obtaining a request for obtaining first information from a first device; and
sending the first information to the first device.

17. The method as claimed in claim 16, wherein sending the first information to the first device comprises:
sending the first information to the first device by a near-distance communication manner.

18. The method as claimed in claim 16, wherein the first information comprises timing advance information.

19. The method as claimed in claim 16, wherein the first information comprises timing advance update information.

20. The method as claimed in claim 19, further comprising:
obtaining a manner of obtaining the timing advance update information by negotiating with the first device.

21. The method as claimed in claim 16, wherein sending the first information to the first device comprises:
obtaining the timing advance update information from a network device; and
sending the obtained timing advance update information to the first device.

22. The method as claimed in claim 16, further comprising:
obtaining the timing advance update information from the first device, wherein the timing advance update information is obtained by communication between the first device and a network device.

23. The method as claimed in claim 16, wherein the first information comprises system information.

24. The method as claimed in claim 23, wherein the system information comprises at least one of: synchronization signal block (SSB), remaining minimum system information (RMSI) and other system information (OSI).

25. The method as claimed in claim 23 or 24, wherein the system information comprises pre-stored system information or obtained from a network device by the second device after obtaining the request.

26. The method as claimed in claim 16, wherein the first device is a terminal supporting new radio-light (NR-light) and the second device is a terminal supporting new radio (NR).

27. An apparatus for obtaining information, for a first device, comprising:
a detecting unit configured to detect a second device capable of providing first information;
a transmitting unit configured to transmit a request for obtaining the first information to the second device; and
a receiving unit configured to obtain the first information from the second device.

28. An apparatus for obtaining information, for a second device, comprising:
an obtaining unit configured to obtain a request for obtaining first information from a first device; and
a sending unit configured to send the first information to the first device.

29. A device for obtaining system information, comprising:
a processor; and
a memory for storing instructions executable by the processor;
wherein the processor is configured to perform the method as claimed in any one of claims 1 to 15.

30. A device for obtaining system information, comprising:
a processor; and
a memory for storing instructions executable by the processor;
wherein the processor is configured to perform the method as claimed in any one of claims 16 to 26.
